# EUROPÄISCHE PATENTSCHRIFT

(11) **EP 1 172 275 B1**
(45) Veröffentlichungstag und Bekanntmachung des Hinweises auf die Patenterteilung: **31.08.2005**
(21) Anmeldenummer: 01250191.2
(22) Anmeldetag: 30.05.2001
(51) Int. Cl.: B61L 15/00, B60L 15/32

(54) **Datenübertragungseinrichtung für einen Wagenverbund**
Data transmission system for a train of cars
Dispositif de transmission de données pour une composition de véhicules

(30) Priorität: 14.06.2000 DE 10029126
(43) Veröffentlichungstag der Anmeldung: 16.01.2002
(73) Patentinhaber: SIEMENS AKTIENGESELLSCHAFT, 80333 München (DE)
(72) Erfinder: Talke, Wolfgang, Dr., 38889 Blankenburg (DE); Wiemers, Thomas, Dr., 81249 München (DE)

(56) Entgegenhaltungen:
- US-A- 5 720 455

## Beschreibung

Die Erfindung bezieht sich auf eine Datenübertragungseinrichtung mit mindestens vier Funkeinrichtungen für einen aus einem Führungswagen und mehreren weiteren Wagen bestehenden Wagenverbund, wobei mindestens eine Funkeinrichtung in dem Führungswagen und mindestens je eine Funkeinrichtung in mindestens drei der weiteren Wagen des Wagenverbundes angeordnet ist und wobei die Funkeinrichtungen funktechnisch untereinander derart in Verbindung stehen, dass Datensignale von jedem mit Funkeinrichtung ausgestatteten Wagen zu der Funkeinrichtung des Führungswagens und/oder umgekehrt übertragbar sind.

Eine derartige Datenübertragungseinrichtung ist sowohl aus der U.S.-Patentschrift 5,720,455 als auch aus dem Prospekt "EP^{XTM} DirectBraking and TrainTalk™, Whitepaper" der Fa. GE Harris Railway Electronics bekannt. Diese vorbekannte Datenübertragungseinrichtung dient dazu, alle Wagen eines Wagenverbundes, und zwar eines Eisenbahnzuges, funktechnisch miteinander zu verbinden. Hierfür weist die vorbekannte Datenübertragungseinrichtung jeweils eine Funkeinrichtung in jedem der Wagen des Wagenverbundes auf; die Funkeinrichtungen werden dabei derart betrieben, dass Datensignale vom Führungswagen - dies ist konkret die mit dem Lokführer besetzte Antriebslokomotive des Eisenbahnzugs - zu jedem der übrigen Wagen (und umgekehrt) übertragen werden können. Die Funkverbindung wird derart aufgebaut, dass die Datensignale jeweils von Wagen zu Wagen des Eisenbahnzuges weitergeleitet werden - also jeweils von einer Funkeinrichtung zur jeweils benachbarten usw. -; die Wagen sind funktechnisch also in einer Art "Funkkette" angeordnet. Um zu vermeiden, dass bei Ausfall einer der Funkeinrichtungen - beispielsweise der Funkeinrichtung in einem der mittleren Wagen des Wagenverbundes - die Funkverbindung insgesamt unterbrochen wird, ist bei der vorbekannten Datenübertragungseinrichtung vorgesehen, dass defekte Funkeinrichtungen in der "Funkkette" übersprungen werden. Im störungsfreien Fall - wenn also alle Funkeinrichtungen normal arbeiten - werden für eine Übertragung von Datensignalen vom Führungswagen zum letzten Wagen des Wagenverbundes alle Funkeinrichtungen der Datenübertragungseinrichtung benötigt.

Der Erfindung liegt die Aufgabe zugrunde, eine Datenübertragungseinrichtung anzugeben, mit der Datensignale noch schneller übertragen werden können als mit der vorbekannten Datenübertragungseinrichtung.

Diese Aufgabe wird ausgehend von einer Datenübertragungseinrichtung der eingangs genannten Art erfindungsgemäß dadurch erreicht, dass mit den mindestens vier Funkeinrichtungen funktechnisch mindestens zwei in Zugrichtung räumlich aufeinanderfolgend angeordnete Funkzellen gebildet sind, wobei in jeder der mindestens zwei Funkzellen jeweils eine Funkeinrichtung als "Master"-Funkeinrichtung und mindestens eine als "Slave"-Funkeinrichtung arbeitet, wobei eine "Slave"-Funkeinrichtung eine solche Funkeinrichtung ist, die ausschließlich mit der "Master"-Funkeinrichtung ihrer jeweiligen Funkzelle kommuniziert, und wobei eine "Master"-Funkeinrichtung eine solche Funkeinrichtung ist, die mit allen "Slave"-Funkeinrichtungen ihrer eigenen Funkzelle sowie zusätzlich mit der in Richtung Führungswagen nächstliegenden "Master"-Funkeinrichtung - sofern vorhanden - sowie mit der in entgegengesetzter Richtung nächstliegenden "Master"-Funkeinrichtung - sofern vorhanden - kommuniziert.

Der wesentliche Vorteil der erfindungsgemäßen Datenübertragungseinrichtung besteht darin, dass mit den Funkeinrichtungen selbständige Funkzellen gebildet sind mit jeweils einer Master-Funkeinrichtung und jeweils mindestens einer Slave-Funkeinrichtung, wodurch ein erheblicher Geschwindigkeitsvorteil bei der Datenübertragung erzielt werden kann; dies soll anhand eines Zahlenbeispiels verdeutlicht werden: Bei einem Wagenverbund mit einem Führungswagen und 150 weiteren Wagen müssen für eine Übertragung von Datensignalen vom Führungswagen des Wagenverbundes zum letzten Wagen des Wagenverbundes bei der vorbekannten Datenübertragungseinrichtung 150 Datenverbindungen aufgebaut werden, weil die Datensignale jeweils von Wagen zu Wagen "weitergereicht" werden. Im Unterschied hierzu sind bei der erfindungsgemäßen Datenübertragungseinrichtung deutlich weniger Datenverbindungen aufzubauen; geht man beispielsweise davon aus, dass jede Funkzelle jeweils eine Master-Funkeinrichtung und beispielsweise vier Slave-Funkeinrichtungen aufweist, so sind bei der erfindungsgemäßen Datenübertragungseinrichtung lediglich 30 Datenverbindungen aufzubauen, weil nämlich die Datensignale anstatt von Wagen zu Wagen von Master-Funkeinrichtung zu Master-Funkeinrichtung weitergereicht werden. Da der Aufbau einer Datenverbindung - je nach Funkstandard - eine z. T. erhebliche Datenverbindungsaufbauzeit erfordert, wird also bei der erfindungsgemäßen Datenübertragungseinrichtung eine erheblich schnellere Datenübertragung ermöglicht als bei der vorbekannten Datenübertragungseinrichtung, weil nämlich insgesamt deutlich weniger Datenverbindungen aufgebaut werden müssen.

Wird ein Wagenverbund neu in Betrieb genommen, so muss von der Datenübertragungseinrichtung festgelegt werden, welche der Funkeinrichtungen als Master-Funkeinrichtung und welche als Slave-Funkeinrichtung arbeiten soll; um dies zu erreichen, wird als vorteilhaft angesehen, wenn die Funkeinrichtung des Führungswagens einen Speicher aufweist, indem abspeicherbar ist, welche der übrigen Funkeinrichtungen als "Master"-Funkeinrichtung arbeitet oder arbeiten soll und welche als "Slave"-Funkeinrichtung.

Im allgemeinen kann die Zuordnung, welche der Funkeinrichtungen als Master-Funkeinrichtung und welche als Slave-Funkeinrichtung arbeiten soll, fest vorgegeben sein; so kann beispielsweise festgelegt sein, dass in jeder Funkzelle zwei Slave-Funkeinrichtungen und eine Master-Funkeinrichtung vorhanden sein soll.

Um aber zu erreichen, dass eine besonders hohe Datenübertragungsgeschwindigkeit erreicht wird, muss eine besonders große Anzahl von Funkeinrichtungen pro Funkzelle erreicht werden, um eine minimale Anzahl von Master-Funkeinrichtungen und damit eine minimale Anzahl von Datenverbindungen zwischen Master-Funkeinrichtungen zu erreichen; gemäß einer Fortbildung der erfindungsgemäßen Datenübertragungseinrichtung wird es daher als vorteilhaft angesehen, wenn die Funkeinrichtungen jeweils eine Empfangsleistungs-Messeinrichtung aufweisen, deren Messergebnisse zur Festlegung herangezogen werden, welche Funkeinrichtungen zu welchen Funkzellen gehören sollen, und zwar im Hinblick auf eine maximale Anzahl an Funkeinrichtungen pro Funkzelle und im Hinblick auf die Gewährleistung einer vorgegebenen Mindestempfangsleistung pro Funkeinrichtung. Bei dieser Fortbildung der erfindungsgemäßen Datenübertragungseinrichtung wird die Größe der Funkzellen unter Berücksichtigung der tatsächlichen Empfangsleistungen festgelegt, so dass optimale Sende- und Empfangsbedingungen eingestellt werden können. Die Festlegung, welche Funkeinrichtungen welche Funkzelle bilden sollen, kann dabei bei sich verändernden Übertragungsbedingungen auch dynamisch angepasst werden.

Damit in dem Führungswagen stets die Information vorliegt, welche Funkeinrichtung wie betrieben wird, wird es als vorteilhaft angesehen, wenn die Funkeinrichtung des Führungswagens derart ausgestaltet ist, dass sie die Festlegung, welche Funkeinrichtungen zu welchen Funkzellen gehören sollen, in ihrem Speicher abspeichert.

Um eine zuverlässige Datenverbindung bei minimaler Sendeleistung der Funkeinrichtungen zu gewährleisten, sollte der Abstand zwischen den Master-Funkeinrichtungen im Mittel ungefähr gleich groß sein; dies lässt sich in vorteilhafter Weise dadurch erreichen, dass von den Funkeinrichtungen jeder Funkzelle diejenige die "Master"-Funkeinrichtung ist, die dem Führungswagen am nächsten liegt.

Im übrigen wird es als vorteilhaft angesehen, wenn die Funkeinrichtung des Führungswagens eine Master-Funkeinrichtung ist, weil so sichergestellt ist, dass der Führungswagen die funktechnische "Leitung" in der ihm zugeordneten Funkzelle hat.

Zur Erläuterung der Erfindung zeigt
eine Figur einen Wagenverbund mit einem Ausführungsbeispiel für eine erfindungsgemäße Datenübertragungseinrichtung.

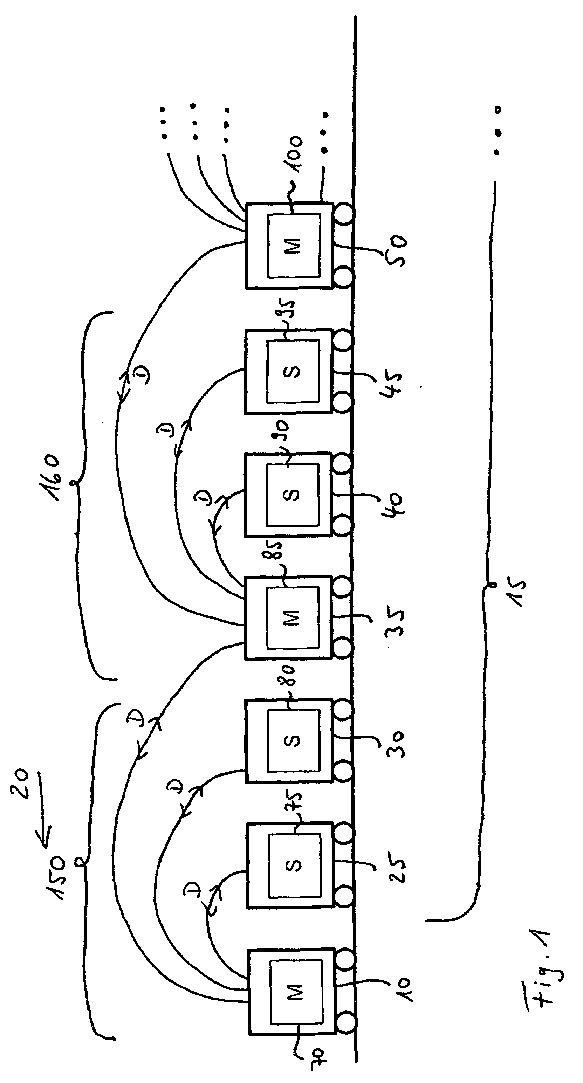

Die Figur zeigt einen Eisenbahnzug als Wagenverbund 5 mit einem Führungswagen 10 - dies ist konkret beispielsweise die Lokomotive oder der Triebwagen des Eisenbahnzugs - und mit mehreren weiteren Wagen (Eisenbahnwaggons) 15, von denen die in Fahrtrichtung bzw. Zugrichtung (angedeutet durch den Pfeil 20) ersten sechs Wagen dargestellt sind. Konkret trägt von den weiteren Wagen 15 der erste das Bezugszeichen 25, der zweite das Bezugszeichen 30, der dritte das Bezugszeichen 35, der vierte das Bezugszeichen 40, der fünfte das Bezugszeichen 45 und der sechste das Bezugszeichen 50. Jeder der Wagen ist jeweils mit einer Funkeinrichtung 70, 75, 80, 85, 90, 95 und 100 ausgestattet; die Funkeinrichtungen 70, 75, 80, 85, 90, 95 und 100 stehen dabei untereinander derart in Verbindung, dass Datensignale D von jedem weiteren Wagen zum Führungswagen 10 und umgekehrt übertragbar sind. Die Funkeinrichtungen 70, 75, 80, 85, 90, 95 und 100 bilden dabei funktechnisch in Fahrtrichtung räumlich aufeinanderfolgend angeordnete Funkzellen 150 und 160, wobei in jeder der Funkzellen 150 und 160 jeweils eine Funkeinrichtung als Master-Funkeinrichtung M und jeweils zwei als Slave-Funkeinrichtungen S arbeiten.

Eine Slave-Funkeinrichtung S soll dabei eine solche Funkeinrichtung sein, die ausschließlich mit der Master-Funkeinrichtung M ihrer jeweiligen Funkzelle kommuniziert, und eine Master-Funkeinrichtung M soll eine solche Funkeinrichtung sein, die mit allen Slave-Funkeinrichtungen S ihrer eigenen Funkzelle sowie zusätzlich mit der in Richtung Führungswagen nächstliegenden Master-Funkeinrichtung M - sofern vorhanden - sowie mit der in entgegengesetzter Richtung nächstliegenden Master-Funkeinrichtung M - sofern vorhanden - kommuniziert. Die Master-Funkeinrichtungen M bilden somit die Schnittstelle zwischen den aneinandergrenzenden Funkzellen.

Um zu zeigen, welche der Funkeinrichtungen 70, 75, 80, 85, 90, 95 und 100 bei der Datenübertragungseinrichtung 5 als Master-Funkeinrichtung arbeiten und welche als Slave-Funkeinrichtung, ist in der Figur bei den Funkeinrichtungen jeweils das Bezugszeichen "M" oder das Bezugszeichen "S" eingetragen. Konkret arbeiten in der Funkzelle 150 die Funkeinrichtung 75 und 80 als Slave-Funkeinrichtungen und die Funkeinrichtung 70 als Master-Funkeinrichtung. In der Funkzelle 160 arbeiten die Funkeinrichtungen 90 und 95 als Slave-Funkeinrichtungen und die Funkeinrichtung 85 als Master-Funkeinrichtung.

Die Funkeinrichtungen des Wagenverbundes 5 bilden in ihrer Gesamtheit eine Datenübertragungseinrichtung für den Wagenverbund 5. Bei der Neuinbetriebnahme dieser Datenübertragungseinrichtung kann beispielsweise wie folgt vorgegangen werden: Die Datenverbindung wird ausgehend von der Funkeinrichtung 70 des Führungswagens 10 aufgebaut; d. h. dass zunächst die Funkeinrichtung 70 in Betrieb genommen wird. Anschließend wird die Funkeinrichtung 75 des ersten weiteren Wagens 25 eingeschaltet und als Slave-Funkeinrichtung an der als Master-Funkeinrichtung arbeitenden Funkeinrichtung 70 angemeldet. Damit ist die erste Funkverbindung hergestellt. Anschließend wird die Funkeinrichtung 80 des zweiten weiteren Wagens 30 eingeschaltet und ebenfalls als Slave-Funkeinrichtung an der als Master-Funkeinrichtung arbeitenden Funkeinrichtung 70 angemeldet.

Mit der Funkeinrichtung 85 des dritten weiteren Wagens 35 wird zunächst genauso vorgegangen wie bei den Funkeinrichtungen 75 und 80 der beiden Wagen 25 und 30; d.h. dass sie zunächst als Slave-Funkeinrichtung an der als Master-Funkeinrichtung arbeitenden Funkeinrichtung 70 angemeldet wird.

Wird nun beispielsweise angenommen, dass es beim Anmelden der Funkeinrichtung 90 des vierten weiteren Wagens 40 als Slave-Funkeinrichtung an der als Master-Funkeinrichtung arbeitenden Funkeinrichtung 70 zu Problemen kommt, weil der Abstand zwischen den beiden Funkeinrichtungen 90 und 70 zu groß ist und die Empfangsleistungen damit so klein sind, dass ein Funkbetrieb zwischen den Funkeinrichtungen 70 und 90 nicht aufgebaut werden kann, so wird wie folgt vorgegangen: Die Funkeinrichtung 85, die wie oben beschrieben, zunächst als Slave-Funkeinrichtung an der Funkeinrichtung 70 angemeldet wurde, wird umgeschaltet in den "Master"-Betrieb; dadurch wird die Funkeinrichtung 85 zu einer Master-Funkeinrichtung, die mit der Master-Funkeinrichtung 70 in Verbindung bleibt. Anschließend wird erneut versucht, die Funkeinrichtung 90 anzumelden, und zwar als Slave-Funkeinrichtung an der Master-Funkeinrichtung 85. Da der Abstand zwischen den Funkeinrichtungen 85 und 90 gering ist, ist der Aufbau dieser Funkverbindung problemlos möglich.

Im Anschluss daran wird dann die Funkeinrichtung 95 des fünften weiteren Wagens 45 als Slave- Funkeinrichtung an der Master-Funkeinrichtung 85 angemeldet. Bei der Anmeldung des sechsten weiteren Wagens 100 erfolgt ebenfalls zunächst die Anmeldung als Slave-Funkeinrichtung. Wird dann - wie in der Figur angenommen - festgestellt, dass zwischen der Funkeinrichtung 85 des dritten weiteren Wagens 35 und der Funkeinrichtung des nicht dargestellten siebenten Wagens keine Funkverbindung aufgrund des großen Abstandes zwischen den beiden Wagen mehr aufgebaut werden kann, so wirdgenauso wie im Zusammenhang mit der Funkeinrichtung 85 beschrieben - die Funkeinrichtung 100 des sechsten weiteren Wagens 50 zur Master-Funkeinrichtung gemacht. Die Funkeinrichtung des nicht dargestellten siebenten Wagens wird dann als Slave-Funkeinrichtung an dieser Master-Funkeinrichtung 100 angemeldet; dies ist in der Figur mit Punkten angedeutet.

Zusammengefasst werden also aneinandergrenzende Funkzellen gebildet, deren Schnittstelle untereinander jeweils durch die Master-Funkeinrichtungen gebildet sind. In dieser Weise werden alle Funkeinrichtungen des Wagenverbundes in Funkverbindungen zueinander gebracht.

Falls die Funkeinrichtungen mit einer Empfangsleistungs-Meßeinrichtung versehen sind, so kann die Zuordnung der Funkeinrichtungen zu Funkzellen und damit die Größe der Funkzellen dynamisch an die Übertragungsbedingungen angepasst werden, und zwar derart, dass bei qualitativ schlechten Empfangsbedingungen (geringen Empfangsleistungen) kleinere Funkzellen gebildet werden und bei guten Empfangsbedingungen größere. Realisieren lässt sich dies technisch beispielsweise dadurch, dass die Funkeinrichtungen regelmäßig ihre Empfangsleistungs-Meßwerte an die Funkeinrichtung 70 des Führungswagens übermitteln, in dem dann die Zuordnung der Funkeinrichtungen zu Funkzellen festgelegt und abgespeichert wird. Diese Zuordnung wird dann den übrigen Funkeinrichtungen über Funk mitgeteilt, damit diese die entsprechenden Funkzellen bilden können. Die Bildung der Funkzellen wird dann von den Funkeinrichtungen automatisch und selbsttätig durchgeführt.

Die Funkeinrichtungen (70, 75, 80, 85, 90, 95, 100) können beispielweise in der DECT-Übertragungstechnik arbeiten; die DECT-Übertragungstechnik ist im Detail in der nachstehend aufgeführten Literatur beschrieben:
1) Walke, Bernhardt:
   Mobilfunknetze und ihre Protokolle
   Band 2. Bündelfunk, schnurlose Telefone, W-ATM,
   Hyperlan, Satellitenfunk, UPT: mit 76 Tabellen. -1998
   (c) B. G. Teubner Stuttgart 1998
   Kapitel 5, DECT, S. 107 bis 216
2) ETSI. Digital European Cordless Telecommunications,
   DE/RES 3001-5, Network Layer
   DE/RES 3001-6, Identities and Addressing
   DE/RES 3001-7, Security Features
   DE/RES 3001-8, Speech Coding and Transmission
   DE/RES 3004, System Description Document.
   European Telecommunications Standards Institute,
   Juni bis August 1991. Draft Standards.

## Patentansprüche

1. Datenübertragungseinrichtung mit mindestens vier Funkeinrichtungen (70, 75, 80, 85, 90, 95, 100) für einen aus einem Führungswagen (10) und mehreren weiteren Wagen (25, 30, 35, 40, 45, 50) bestehenden Wagenverbund (5),
- wobei mindestens eine Funkeinrichtung (70) in dem Führungswagen (10) und mindestens je eine Funkeinrichtung (75, 80, 85, 90, 95, 100) in mindestens drei der weiteren Wagen (25, 30, 35, 40, 45, 50) des Wagenverbundes (5) angeordnet ist und
- wobei die Funkeinrichtungen (70, 75, 80, 85, 90, 95, 100) funktechnisch untereinander derart in Verbindung stehen, dass Datensignale (D) von jedem mit Funkeinrichtung (75, 80, 85, 90, 95, 100) ausgestatteten weiteren Wagen (25, 30, 35, 40, 45, 50) zu der Funkeinrichtung (70) des Führungswagens (10) und/oder umgekehrt übertragbar sind,
**dadurch gekennzeichnet, dass** mit den mindestens vier Funkeinrichtungen (70, 75, 80, 85, 90, 95, 100) funktechnisch mindestens zwei in Zugrichtung räumlich aufeinanderfolgend angeordnete Funkzellen (150, 160) gebildet sind,
- wobei in jeder der mindestens zwei Funkzellen (150, 160) jeweils eine Funkeinrichtung als "Master"- Funkeinrichtung (70), 85, 100) und mindestens eine als "Slave"-Funkeinrichtung (75, 80, 90, 95) arbeitet,
- wobei eine "Slave"-Funkeinrichtung eine solche Funkeinrichtung ist, die ausschließlich mit der "Master"-Funkeinrichtung ihrer jeweiligen Funkzelle kommuniziert, und
- wobei eine "Master"-Funkeinrichtung eine solche Funkeinrichtung ist, die mit allen "Slave"-Funkeinrichtungen ihrer eigenen Funkzelle sowie zusätzlich mit der in Richtung Führungswagen nächstliegenden "Master"- Funkeinrichtung - sofern vorhanden - sowie mit der in entgegengesetzter Richtung nächstliegenden "Master"- Funkeinrichtung - sofern vorhanden - kommuniziert.

2. Datenübertragungseinrichtung nach Anspruch 1,
**dadurch gekennzeichnet, dass**
- die Funkeinrichtung (70) des Führungswagens (10) einen Speicher aufweist, indem abspeicherbar ist, welche der übrigen Funkeinrichtungen (75, 80, 85, 90, 95, 100) als "Master"-Funkeinrichtung arbeitet oder arbeiten soll und welche als "Slave"-Funkeinrichtung.

3. Datenübertragungseinrichtung nach Anspruch 2,
**dadurch gekennzeichnet, dass**
- die Zuordnung, welche der übrigen Funkeinrichtungen (75, 80, 85, 90, 95, 100) als "Master"-Funkeinrichtung arbeitet oder arbeiten soll und welche als "Slave"-Funkeinrichtung, fest vorgegeben ist.

4. Datenübertragungseinrichtung nach einem der Ansprüche 1 bis 3,
**dadurch gekennzeichnet, dass**
- die Funkeinrichtungen (70, 75, 80, 85, 90, 95, 100) jeweils eine Empfangsleistungs-Meßeinrichtung aufweisen, deren Messergebnisse zur Festlegung herangezogen werden, welche Funkeinrichtungen zu welchen Funkzellen gehören sollen, und zwar im Hinblick auf eine maximale Anzahl an Funkeinrichtungen pro Funkzelle und im Hinblick auf die Gewährleistung einer vorgegebenen Mindestempfangsleistung pro Funkeinrichtung.

5. Datenübertragungseinrichtung nach Anspruch 4 in dessen Rückbezug auf Anspruch 2,
**dadurch gekennzeichnet, dass**
- die Funkeinrichtung (70) des Führungswagens (10) derart ausgestaltet ist, dass sie die Festlegung, welche Funkeinrichtungen zu welchen Funkzellen (150, 160) gehören sollen, in ihrem Speicher abspeichert.

6. Datenübertragungseinrichtung nach einem der vorangehenden Ansprüche,
**dadurch gekennzeichnet, dass**
- von den Funkeinrichtungen jeder Funkzelle (150, 160) diejenige die "Master"-Funkeinrichtung (M) ist, die dem Führungswagen (10) am nächsten liegt.

7. Datenübertragungseinrichtung nach einem der vorangehenden Ansprüche,
**dadurch gekennzeichnet, dass**
- die Funkeinrichtung (70) des Führungswagens (10) eine "Master"-Funkeinrichtung (M) ist.

## Claims

1. Data transmission device having at least four radio devices (70, 75, 80, 85, 90, 95, 100) for a train (5) of vehicles composed of a leading vehicle (10) and a plurality of other vehicles (25, 30, 35, 40, 45, 50),
- wherein at least one radio device (70) is arranged in the leading vehicle (10) and in each case at least one radio device (75, 80, 85, 90, 95, 100) is arranged in at least three of the other vehicles (25, 30, 35, 40, 45, 50) of the train (5) of vehicles, and
- wherein the radio devices (70, 75, 80, 85, 90, 95, 100) are connected to one another by radio in such a way that data signals (D) from each other vehicle (25, 30, 35, 40, 45, 50) which is equipped with a radio device (75, 80, 85, 90, 95, 100) can be transmitted to the radio device (70) of the leading vehicle (10) and/or vice versa,
**characterized in that** at least two radio cells (150, 160) which are arranged in spatial succession in the pulling direction are formed by radio equipment by means of the at least four radio devices (70, 75, 80, 85, 90, 95, 100),
- wherein in each of the at least two radio cells (150, 160) in each case one radio device operates as a "master" radio device (70, 85, 100) and at least one operates as a "slave" radio device (75, 80, 90, 95),
- wherein a "slave" radio device is a radio device which communicates exclusively with the "master" radio device of its respective radio cell, and
- wherein a "master" radio device is a radio device which communicates with all the "slave" radio devices of its own radio cell as well as additionally with the next "master" radio device in the direction of the leading vehicle, if such a radio device is present, and with the next "master" radio device in the opposite direction if such a radio device is present.

2. Data transmission device according to Claim 1, **characterized in that**
- the radio device (70) of the leading vehicle (10) has a memory in which it is possible to store information indicating which of the other radio devices (75, 80, 85, 90, 95, 100) operates or is intended to operate as a "master" radio device and which operates or is intended to operate as a "slave" radio device.

3. Data transmission device according to Claim 2, **characterized in that**
- the assignment of which of the other radio devices (75, 80, 85, 90, 95, 100) operates or is intended to operate as a "master" radio device and which operates or is intended to operate as a "slave" radio device is permanently predefined.

4. Data transmission device according to one of Claims 1 to 3, **characterized in that**
- the radio devices (70, 75, 80, 85, 90, 95, 100) each have a reception power measuring device whose measurement results are used to define which radio devices are intended to be associated with which radio cells, specifically with respect to a maximum number of radio devices per radio cell and with respect to ensuring a predefined minimum reception power per radio device.

5. Data transmission device according to Claim 4 referring back to Claim 2, **characterized in that**
- the radio device (70) of the leading vehicle (10) is equipped in such a way that it stores the definition of which radio devices are intended to be associated with which radio cells (150, 160) in its memory.

6. Data transmission device according to one of the preceding claims, **characterized in that**
- of the radio devices of each radio cell (150, 160) that radio device which is nearest to the leading vehicle (10) is the "master" radio device (M).

7. Data transmission device according to one of the preceding claims, **characterized in that**
- the radio device (70) of the leading vehicle (10) is a "master" radio device (M).

## Revendications

1. Dispositif de transmission de données comprenant au moins quatre dispositifs (70, 75, 80, 85, 90, 95, 100) de radiocommunication pour une composition (5) de voitures constituée d'une voiture (10) de tête et de plusieurs autres voitures (25, 30, 35, 40, 45, 50),
- au moins l'un des dispositifs (70) de télécommunication étant disposé dans la voiture (10) de tête et au moins, respectivement, un dispositif (75, 80, 85, 90, 95, 100) de télécommunication étant disposé dans au moins trois des autres voitures (25, 30, 35, 40, 45, 50) de la composition (5) de voitures, et
- dans lequel les dispositifs (70, 75, 80, 85, 90, 95, 100) de télécommunication sont reliés entre eux du point de vue de la technique de communication de façon à ce que des signaux (D) de données de chaque autre voiture (25, 30, 35, 40, 45, 50) munie de dispositifs (75, 80, 85, 90, 95, 100) de télécommunication puissent être transmis au dispositif (70) de télécommunication de la voiture (10) de tête et/ou inversement,
**caractérisé en ce que**, par les au moins quatre dispositifs (70, 75, 80, 85, 90, 95, 100) de radiocommunication, sont formées du point de vue de la technique de radiocommunication au moins deux cellules (150, 160) de radiocommunication qui se succèdent dans l'espace dans la direction du train,
- dans lequel, dans chacune des au moins deux cellules (150, 160) de radiocommunication, respectivement, un dispositif de radiocommunication opère en tant que dispositif (70, 85, 100) de radiocommunication « maître » et au moins un dispositif de radiocommunication opère en tant que dispositif (75, 80, 90, 95) de radiocommunication « esclave »,
- dans lequel un dispositif de radiocommunication esclave est un dispositif de radiocommunication tel qu'il communique exclusivement avec le dispositif de radiocommunication « maître » de sa cellule de radiocommunication respective, et
- dans lequel un dispositif de radiocommunication « maître » est un dispositif de radiocommunication tel qu'il communique avec tous les dispositifs de radiocommunication « esclaves » de sa propre cellule de radiocommunication ainsi qu'en plus avec le dispositif de radiocommunication « maître » qui en est le plus proche dans la direction de la voiture de tête dans la mesure où il y en a un, ainsi qu'avec le dispositif de radiocommunication « maître » le plus proche dans le sens opposé dans la mesure où il y en a un.

2. Dispositif de transmission de données suivant la revendication 1, **caractérisé en ce que**
- le dispositif (70) de radiocommunication de la voiture (10) de tête a une mémoire dans laquelle peut être mémorisé celui ou ceux des autres dispositifs (75, 80, 85, 90, 95, 100) de radiocommunication qui doit ou qui doivent travailler comme dispositif de radiocommunication « maître » et celui qui doit travailler comme dispositif de radiocommunication « esclave ».

3. Dispositif de transmission de données suivant la revendication 2, **caractérisé en ce que**
- l'affectation de celui ou ceux des autres dispositifs (75, 80, 85, 90, 95, 100) de radiocommunication qui doit ou doivent travailler comme dispositif de radiocommunication « maître » et celui qui doit travailler comme dispositif de radiocommunication « esclave » est prescrite de manière fixe.

4. Dispositif de transmission de données suivant l'une des revendications 1 à 3, **caractérisé en ce que**
- les dispositifs (70, 75, 80, 85, 90, 95, 100) de radiocommunication ont, respectivement, un dispositif de mesure de la puissance reçue dont les résultats de la mesure sont mis à profit pour fixer quels dispositifs de radiocommunication doivent appartenir à quelles cellules de radiocommunication et cela compte tenu d'un nombre maximum de dispositifs de radiocommunication par cellule de radiocommunication et compte tenu de l'assurance d'une puissance reçue minimum prescrite par dispositif de radiocommunication.

5. Dispositif de transmission de données suivant la revendication 4 quand elle est rattachée à la revendication 2, **caractérisé en ce que**
- le dispositif (70) de radiocommunication de la voiture (10) de tête est tel qu'il mémorise dans sa mémoire quels dispositifs de radiocommunication doivent appartenir à quelles cellules (150, 160) de radiocommunication.

6. Dispositif de transmission de données suivant l'une des revendications précédentes, **caractérisé en ce que**
- parmi les dispositifs de radiocommunication de chaque cellule (150, 160) de radiocommunication, celui qui est le dispositif (M) de radiocommunication « maître » est celui qui se trouve le plus près de la voiture (10) de tête.

7. Dispositif de transmission de données suivant l'une des revendications précédentes, **caractérisé en ce que**
- le dispositif (70) de radiocommunication de la voiture (10) de tête est un dispositif (M) de radiocommunication « maître ».
